# EUROPEAN PATENT APPLICATION

(11) **EP 2 101 490 A2**
(43) Date of publication of application: **16.09.2009**
(21) Application number: 08171255.6
(22) Date of filing: 10.12.2008
(51) Int. Cl.: H04N 5/445

(54) **Image processing apparatus and control method thereof**

(30) Priority: 13.03.2008 KR 20080023494
(71) Applicant: Samsung Electronics Co., Ltd., Suwon-si, Gyeonggi-do 442-742 (KR)
(72) Inventor: Lee, Tae-dong, Guro-gu, Seoul (KR); Kim, Eun-seok, Gongse-dong, Giheung-gu, Yongin-si, Gyeonggi-do (KR)
(74) Representative: Robinson, Ian Michael

(57) **Abstract**

An image processing apparatus (100) with a display unit (40) includes: a communication unit (20) which communicates with a server (200) that stores therein content organization information of a video content; an input unit (10) through which a video signal contained in the video content is input; a processing unit (30) which processes the video content; and a controller (60) which controls the processing unit (30) to display the video content based on the content organization information on the display unit (40).

## Description

### BACKGROUND OF INVENTION

### Field of Invention

Apparatuses, systems and methods consistent with the present invention relate in general to the field of image processing, and more particularly, to an image processing apparatus displaying a video content received through an two-way communication, an image processing system having the same, and a control method thereof.

### Description of the Related Art

In general, an image processing apparatus receives and displays a video signal from a digital versatile disc (DVD) or the like. Recently, the image processing apparatus not only receives a video signal from a video source such as a broadcasting station and a server, but also interactively communicate with the video source through Ethernet, the Internet, etc. to thereby receive appendix information. For example, a user can select an Internet function and do web surfing while watching the video signal.

However, a conventional image processing apparatus displays only the appendix information instead of displaying video signal when a user selects the Internet function, so that it is difficult for the user to watch both the received video signal and the appendix information received through the Internet, and the video signal or the appendix information is displayed as only a full screen.

### SUMMARY OF THE INVENTION

According to the present invention there is provided an image processing apparatus and a control method thereof as set forth in the appended claims. Other features of the invention will be apparent from the dependent claims, and the description which follows.

One exemplary aspect of the present invention provides an image processing apparatus capable of displaying a video signal and appendix information through an duplex transmission and a control method thereof.

Another exemplary aspect of the present invention provides an image processing apparatus which can receive content organization information about a video signal and appendix information and display the video signal and the appendix information in various forms on the basis of the content organization information, an image processing system having the same and a control method thereof.

In one exemplary aspect there is provided an image processing apparatus with a display unit, comprising: a communication unit which communicates with a server that stores therein content organization information of a video content; an input unit through which a video signal contained in the video content is input; a processing unit which processes the video content; and a controller which controls the processing unit to display the video content based on the content organization information on the display unit.

The video content may comprise appendix information.

The content organization information may comprise at least one of source information of the video signal and source information of the appendix information.

The video signal may comprise a broadcasting signal, an internal image input from an internal video source, an external image input from an external video source, and a server image input from the server.

The source information of the video signal may comprise at least one of a channel name, a channel number, an image size and a genre.

The appendix information may comprise at least one of an image, a moving picture and a text.

The source information of the appendix information may comprise a link address of the appendix information.

The controller may control the processing unit to create a content list based on the content organization information received from the server.

The image processing apparatus may further comprise a user input unit, wherein the controller controls the processing unit to display the video content on the display unit on the basis of the content organization information selected through the user input unit.

The content organization information may use a tag format.

In another exemplary aspect there is provided a method of controlling an image processing apparatus, the method comprising: receiving content organization information of a video content; receiving the video content on the basis of the content organization information; and displaying the video content.

The receiving the video content may comprise receiving a video signal contained in the video content.

The receiving the video content may comprise receiving appendix information contained in the video content.

The content organization information may comprise at least one of source information of the video signal and source information of the appendix information.

The source information of the video signal may comprise at least one of a channel name, a channel number, an image size and a genre.

The appendix information may comprise at least one link address of an image, a moving picture and a text.

The method may further comprise creating a content list based on the content organization information, wherein the receiving the video content comprises receiving the video content on the basis of the content organization information selected in the content list.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of an image processing system according to an exemplary embodiment of the present invention;
FIG. 2A shows content organization information stored in a server of the image processing system according to an exemplary embodiment of the present invention;
FIG. 2B shows a video signal corresponding to the content organization information of FIG. 2A;
FIG. 3A shows content organization information stored in the server of the image processing system according to an exemplary embodiment of the present invention;
FIG. 3B shows a video signal and appendix information corresponding to the content organization information of FIG. 3A;
FIG. 4 is a flowchart of a control method in an image processing apparatus according to an exemplary embodiment of the present invention; and
FIG. 5 illustrates that the content organization information is changed in the image processing apparatus according to an exemplary embodiment of the present invention.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The embodiments are described below so as to explain the present invention by referring to the figures.

### [First Embodiment]

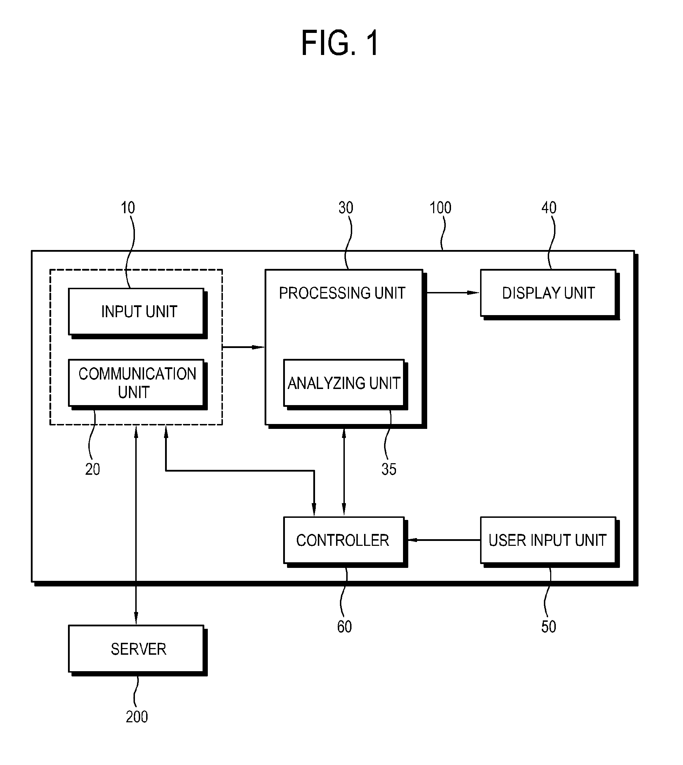

FIG. 1 is a control block diagram of an image processing system according to an exemplary embodiment of the present invention. As shown in FIG. 1, an image processing system includes a server 200 and an image processing apparatus 100.

The server 200 communicates with the image processing apparatus 100 and offers appendix information requested by the image processing apparatus 100. Content organization information of a video content is stored in the server 200. The video content includes a video signal and the appendix information. The video content may include only the video signal or both the video signal and the appendix information. The content organization information may be generated by a broadcasting station for terrestrial broadcasting, cable television, local broadcasting or the like and a server manager, and stored in the server 200.

Here, the content organization information is source information that includes information about a source of the video signal, and information about an image to be displayed. The video signal may contain a broadcasting signal; an image from an internal or external image source such as a video cassette recorder (VCR), a digital versatile recorder (DVDR), etc.; and an image from a server 200. If the video signal is the broadcasting signal, the source information includes a channel name, a channel number, an image size, a genre, a resolution, a display position, etc. If the video signal is output from the internal or external image source, the source information includes a name of an image source, a port number of a connector unit to which the image source is connected, an image size, a genre, a resolution, a display position, etc. If the video signal is output from the server 200, the source information includes a server name, a server internet protocol (IP) address, an image size, a genre, a resolution, a display position, etc.

Further, the content organization information includes source information of appendix information displayed together with the video signal. The appendix information may be a web document such as an image, a moving picture, a text, and the source information of the appendix information may include a web address linked to the web document.

The content organization information may be stored in the server 200 in the form of a programming language such as a hypertext markup language (HTML) using a tag format. When the image processing apparatus 100 requests the content organization information, the server 200 offers the content organization information to the image processing apparatus 100.

The image processing apparatus 100 processes and displays the video signal and the appendix information on the basis of the content organization information offered from the server 200. The image processing apparatus 100 may be realized as a television and include an input unit 10, a communication unit 20, a processing unit 30, a display unit 40, a user input unit 50, and a controller 60.

The input unit 10 includes a tuner unit (not shown) and the connector unit (not shown) to which an external device is connected, thereby receiving the video signal. The tuner (not shown) includes one or more tuners, a demodulator to demodulate a tuned signal, a decoder, a multiplexer (MUX), etc. The tuner unit is turned to a broadcasting signal having a frequency band corresponding to a tuning control signal from the controller 60 (to be described later). The broadcasting signal of the tuned channel contains various signal such as a video signal, an audio signal and data signal. The signals are time-division multiplexed and packetized so that the input unit 10 receives the signals in the form of a transport stream.

For example, in the case of a digital broadcasting signal, a demodulator applies a vestigial side band (VSB) demodulation, error correction, etc. to the received broadcasting signal, and outputs the transport stream. At this time, the tuner unit (not shown) may include an analog tuner, a digital tuner or a multi-tuner to receive all of an analog broadcasting signal and a digital broadcasting signal.

If the image processing apparatus 100 is realized as an Internet protocol television (IPTV), the input unit 10 may include a content receiver to receive a video content through an Internet line.

The communication unit 20 communicates with the sever 200 and receives the content organization information from the server 200. Further, the communication unit 20 receives the appendix information which is linked through the source information, such as an image, a text or the like. The source information of the appendix information is contained in the content organization information. According to an exemplary embodiment of the present invention, the communication unit 20 may be achieved by a wire/wireless local area network (LAN), a wire/wireless modem, etc. as long as it can communicate with the server 200.

Here, the image processing apparatus 100 according to an embodiment of the present invention includes the input unit 10 and the communication unit 20 which are separated from each other, but not limited thereto. Alternatively, if the video signal is transmitted through an Internet line, the input unit 10 and the communication unit 20 may be integrated into a single unit. In this case, the communication unit 20 communicates with the server 200 to receive both the video signal and the appendix information.

The processing unit 30 processes the video content, i.e., the video signal and the appendix information received on the basis of the content organization information. Further, the processing unit 30 converts the video signal and the appendix information to have a format displayable on the display unit 40, e.g., into a digital RGB signal. In this embodiment, the processing unit 30 may include an analyzing unit 35 for analyzing the content organization information received from the server 200 and providing it to the controller 60. That is, the analyzing unit 35 divides a character string of a program language constituting the offered content organization information and analyzes the source information of the video signal and the source information of the appendix information contained in the content organization information.

Also, the processing unit 30 may have various functions corresponding to the formats of the input video signal. For example, the processing unit 30 may have an analog/digital (A/D) converting function to convert a video signal having various formats into a digital video signal having a certain format; a digital decoding function; a scaling function to adjust a vertical frequency a resolution, a screen ratio, etc. of the received digital and/or analog video signal to be adapted to output regulations of the display unit 40; and a predetermined format converting function.

The display unit 40 displays the video content processed by the processing unit 30. For example, the display unit 40 may be achieved by a digital light processing (DLP), a liquid crystal display (LCD), a plasma display panel (PDP), etc. Further, the display unit 40 may be separately provided in the outside and connected via a connector (not shown).

The user input unit 50 is provided with a key or the like for selecting a content display function to display the video signal and the appendix information on the basis of the content organization information. In the user input unit 50, the key for selecting the content display function is provided as a hot key. Also, the user input unit 50 may include a number key for selecting a channel, an arrow key, and a function key for selecting the function of the image processing apparatus 100. The user input unit 50 may include a menu key placed in a remote controller or a casing of the image processing apparatus 100, and a key signal generator generating a key signal corresponding to key manipulation.

The controller 60 controls the processing unit 30 so that the video content can be displayed on the basis of the content organization information received from the server 200. Here, the controller 60 may be achieved by a central processing unit (CPU), a microcomputer, etc.

In more detail, when the content display function is selected through the user input unit 50, the controller 60 communicates with the server 200 and receives the content organization information. The content organization information received from the server 200 is analyzed by the analyzing unit 35. As described above, the content organization information may contain the source information of the video signal together with the source information of the appendix information. If the content organization information contains the source information of the video signal, the controller 60 controls the input unit 10 to receive the video signal on the basis of the source information of the video signal contained in the content organization information. If the content organization information contains the source information of the appendix information, the controller 60 controls the communication unit 20 to receive the appendix information on the basis of the source information of the appendix information contained in the content organization information. The received video signal and the received appendix information are processed by the processing unit 30 and then displayed on the display unit 40.

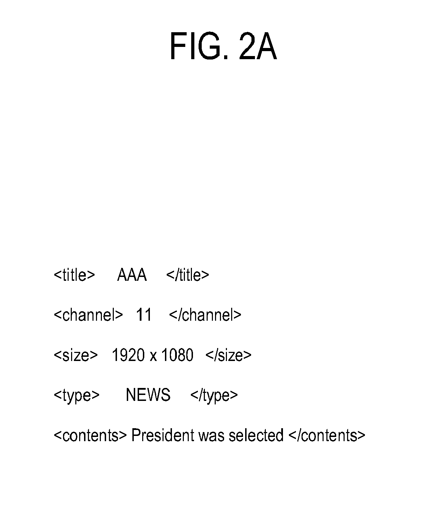

Referring to FIG. 2A, the source information of the video signal includes <title> for the channel name, <channel> for a channel number, <size> for an image size, and <type> for a genre. Further, the source information of the appendix information includes <contents>.

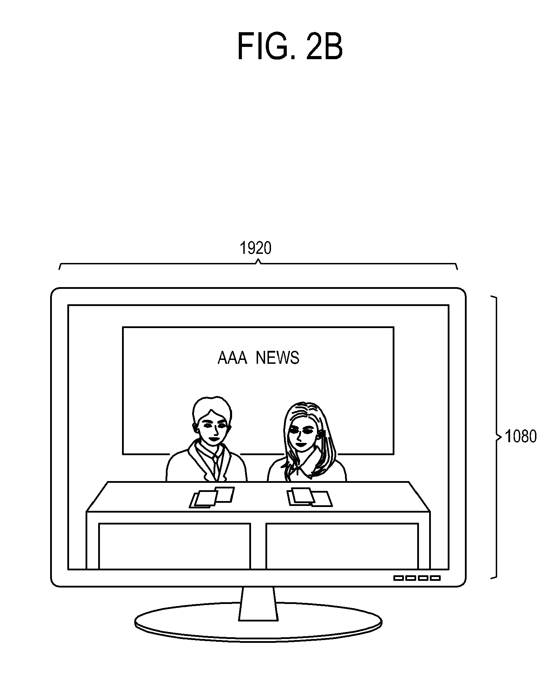

FIG. 2A illustrates the video signal contained in the content organization information in which the channel name is "AAA," the channel number is "11," the image size is "1920*1080," and the genre is "NEWS." Further, the appendix information is "President was selected." In this case, the controller 60 controls the input unit 10 to receive the video signal corresponding to the channel of "11" whose genre is "NEWS" on the basis of the content organization information. Then, the controller 60 controls the processing unit 30 to display the received video signal by the size of "1920*1080" as shown in FIG. 2B. If the display unit 40 is set to have a resolution of "1920*1080," the video signal is processed to be displayed as a full screen. Since the video signal is processed to be displayed as a full screen, the appendix information is not shown in FIG. 2B but may be displayed by a separate manipulation.

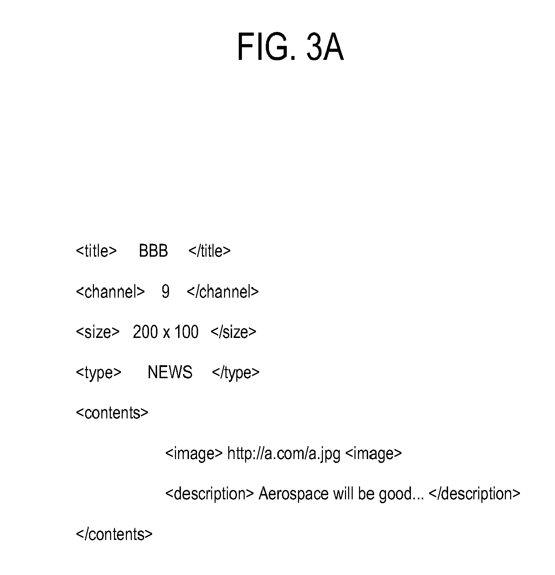

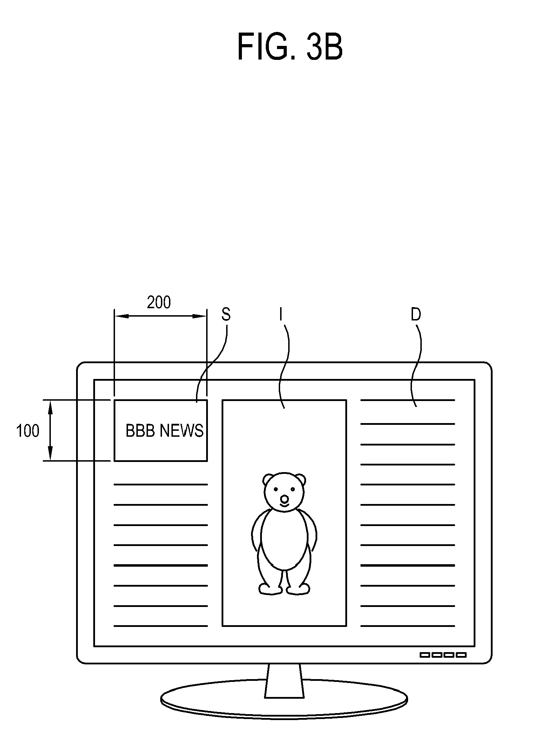

FIG. 3A illustrates the video signal contained in the content configuration information in which the channel name is "BBB," the channel number is "9," the image size is "200*100," and the genre is "NEWS." Further, the appendix information is a link address of "http://a.com/a.jpg" and a description file "Aerospace will be good..." In this case, the controller 60 controls the input unit 10 to receive the video signal corresponding to the channel of "9" whose genre is "NEWS" on the basis of the content organization information. Then, the controller 60 controls the communication unit 20 to access "http://a.com/a.jpg" and receive an image file and a description file. Thus, the video signal is displayed as a size of 200*100 in a region S, the image film is displayed in a region I, and the description file of "Aerospace will be good..." is displayed in a region D. Accordingly, both the video signal and the appendix information are displayed at the same time.

The controller 60 creates a content list based on the channel name of the video signal contained in the content organization information received from the server 200. Further, the video content is received and displayed according to the content organization information selected through the user input unit 50.

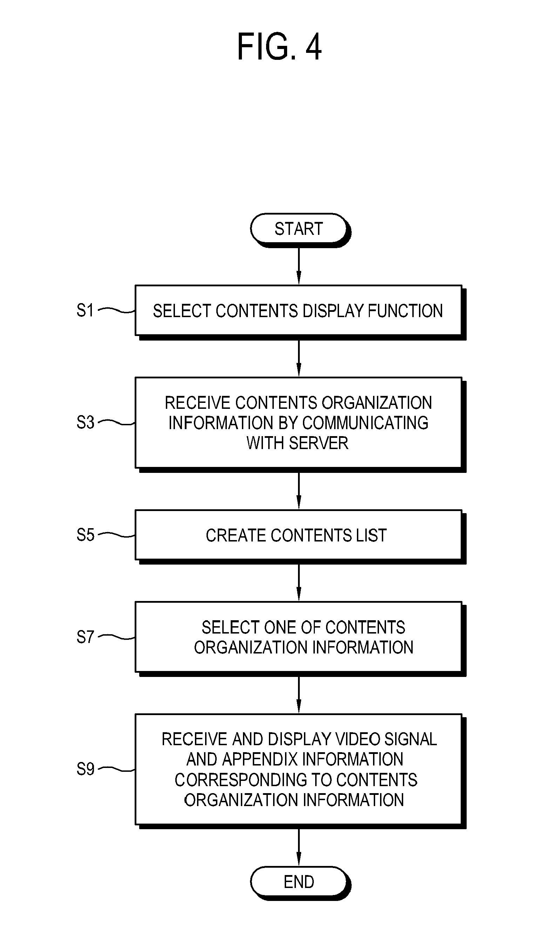

Below, a control method of the image processing apparatus 100 according to an embodiment of the present invention will be described with reference to FIG. 4.

As shown in FIG. 4, when the content display function is selected through the user input unit 50 (S1), the controller 60 controls the communication unit 20 to communicate with the server 200 and receive the content organization information (S3)

Then, the content list is created using the channel name of the video signal contained in the received content organization information (S5).

When one video content is selected in the content list (S7), the controller 60 controls the input unit 10 to receive the video signal on the basis of the content organization information corresponding to the selected video content, and controls the communication unit 20 to receive the appendix information.

Further, the processing unit 30 is controlled to display the received video signal and the received appendix information on the basis of the content organization information (S9).

Thus, the image processing apparatus receives and displays the video signal and the appendix information on the basis of the content organization information offered from the server 200.

Further, the video signal and the appendix information may be displayed in the various forms based on the content organization information at the same time. Also, it is easy to select one among plural channels through the content list, and it is possible to watch both the video signal and the appendix information.

### [Second Embodiment]

Below, a second embodiment of the present invention will be described, and repetitive descriptions to the first embodiment will be avoided as necessary.

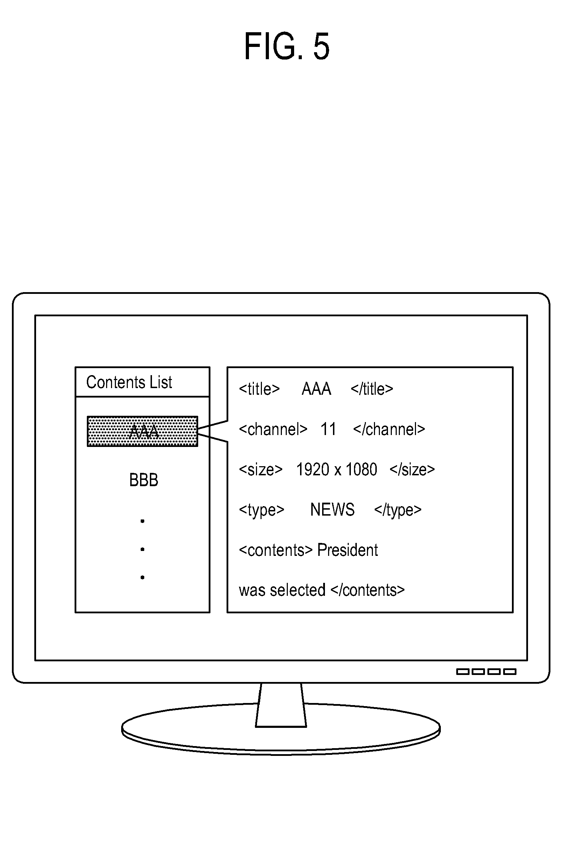

According to the second embodiment, a user can change the content organization information stored in the server 200. Referring to FIG. 5, the controller 60 creates the content list based on the content organization information received from the server 200. A user selects the content organization information he/she wants to change in the content list. If the content organization information corresponding to the channel name of "AAA" is selected, an instruction code is displayed. The user changes at least one of the source information of the video signal and the source information of the appendix information. Then, the controller 60 sends the content organization information changed by the user to the server 200, thereby changing the content organization information.

Accordingly, the user may change the content organization information so that the video signal and the appendix information can be displayed as desired.

As described above, the present invention provides an image processing apparatus which communicates with a server to receive content organization information, receives a video signal and appendix information corresponding to the received content organization information, and displays the video signal and the appendix information on the basis of the content organization information, an image processing system having the same and a control method thereof.

Another aspect of the present invention is to provide an image processing apparatus which displays a video signal and appendix information in various desired styles based on content organization information changeable by a user, an image processing system having the same and a control method thereof.

Still another aspect of the present invention is to provide an image processing apparatus capable of easily selecting a channel among a plurality of channels through a contents list and shows a video signal and appendix information corresponding to the selected channel, an image processing system having the same and a control method thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus (100) with a display unit (40), comprising:
a communication unit (20) which communicates with a server (200) that stores therein content organization information of a video content;
an input unit (10) through which a video signal contained in the video content is input;
a processing unit (30) which processes the video content; and
a controller (60) which controls the processing unit (30) to display the video content based on the content organization information, on the display unit (40).

2. The image processing apparatus (100) according to claim 1, wherein the video content comprises appendix information.

3. The image processing apparatus (100) according to claim 2, wherein the content organization information comprises at least one of source information of the video signal and source information of the appendix information.

4. The image processing apparatus (100) according to claim 3, wherein the video signal comprises a broadcasting signal, an internal image input from an internal video source, an external image input from an external video source, and a server image input from the server (200).

5. The image processing apparatus (100) according to claim 4, wherein the source information of the video signal comprises at least one of a channel name, a channel number, an image size and a genre.

6. The image processing apparatus (100) according to claim 3, wherein the appendix information comprises at least one of an image, a moving picture and a text.

7. The image processing apparatus (100) according to claim 6, wherein the source information of the appendix information comprises a link address of the appendix information.

8. The image processing apparatus (100) according to any preceding claim, wherein the controller (60) controls the processing unit (30) to create a content list based on the content organization information received from the server (200).

9. The image processing apparatus (100) according to any of claims 1 to 8, further comprising a user input unit (50),
wherein the controller (60) controls the processing unit (30) to display the video content on the display unit (40) based on the content organization information selected through the user input unit (50).

10. The image processing apparatus (100) according to any preceding claim, wherein the content organization information uses a tag format.

11. A method of controlling an image processing apparatus (100), the method comprising:
receiving content organization information of a video content;
receiving the video content based on the content organization information; and displaying the video content.

12. The method according to claim 11, wherein the receiving the video content comprises receiving a video signal contained in the video content and receiving appendix information contained in the video content.

13. The method according to claim 12, wherein the content organization information comprises at least one of source information of the video signal and source information of the appendix information.

14. The method according to claim 13, wherein the source information of the video signal comprises at least one of a channel name, a channel number, an image size and a genre and the appendix information comprises at least one link address of an image, a moving picture and a text.

15. The method according to claim 11, further comprising creating a content list based on the content organization information,
wherein the receiving the video content comprises receiving the video content based on the content organization information selected in the content list.
